# EUROPEAN PATENT SPECIFICATION

(11) **EP 1 826 087 B1**
(45) Date of publication and mention of the grant of the patent: **25.02.2009**
(21) Application number: 06025878.7
(22) Date of filing: 13.12.2006
(51) Int. Cl.: B60W 10/02

(54) **Automatic gear shift device and method for a vehicle**
Schaltvorrichtung und -verfahren für ein automatisches Kraftfahrzeuggetriebe
Dispositif et méthode de commande d'une boîte de vitesses automatique

(30) Priority: 18.04.2006 JP 2006114700; 24.02.2006 JP 2006048086
(43) Date of publication of application: 29.08.2007
(73) Proprietor: Yamaha Hatsudoki Kabushiki Kaisha, Iwata-shi, Shizuoka-ken 438-8501 (JP)
(72) Inventor: Zenno, Tooru, c/o Yamaha Hatsudoki K.K., Iwata-shi Shizuoka-ken 438-8501 (JP); Takeuchi, Yoshihiko, c/o Yamaha Hatsudoki K.K., Iwata-shi Shizuoka-ken 438-8501 (JP)
(74) Representative: Grünecker, Kinkeldey, Stockmair & Schwanhäusser Anwaltssozietät

(56) References cited:
- EP-A- 1 669 270
- WO-A-02/087916
- DE-A1- 10 306 934
- US-A1- 2004 118 652

## Description

The present invention relates to a vehicle according to the preamble of claim 1 and to a method according to the preamble of claim 15.

Vehicles provided with an automatic shift control device for engaging/disengaging a friction clutch and for performing a gear change in a dog clutch gearbox with an electric actuator (automated manual transmission device) are conventionally known. Also, a vehicle, which is provided with such an automatic shift control device and in which when so-called dog abutment occurs and gears cannot be engaged with each other during a shift change operation, the torque of a shift actuator is once decreased and then increased again to engage the gears with each other, has been proposed (see Patent Document 1, for example).
Patent Document 1: JP-A-Hei 11-082710
Patent Document 2: EP 1 669 270 A2 (part of the prior art according to Article 54(3) EPC) shows a method of engaging a gear of a transmission while the vehicle is at standstill.
Patent Document 3: DE 103 06 934 A1 shows a method for determining the contact point of the clutch.

When the above-mentioned dog abutment is occurring, engaging projections and engaging recesses formed on and in end faces of two gears, respectively to be engaged with each other, are not engaged with each other. At this time, the engaging projections of one of the gears are circumferentially offset from the engaging recesses of the other gear by a certain angle and in contact with an end face of the other gear. Therefore, as described in Patent Document 1, it is sometimes impossible to correct the offset between the gears and engage them reliably only by adjusting the torque of the shift actuator.

The present invention has been made in view of the above point, and it is, therefore, and object of the present invention is to provide an automatic shift control device and an automatic shift control method which can engage specific gears with each other properly whenever a shift change operation is conducted.

According to the present invention, this objective is performed by the features of claims 1 and 15.

Preferably, the dog clutch gearbox has a plurality of first gears each having engaging projections, and a plurality of second gears each having engaging recesses engageable with the engaging projections, and in which a gear change is made when the engaging projections of each first gear are engaged with any engaging recesses of each second gear.

Further, preferably the control unit is configured to shift the clutch position of the friction clutch to the second clutch position at which the friction clutch is in a mechanical maximum disengaged state when the vehicle is stopped and when the dog clutch gearbox is in a gear-in state and the engine is being driven, and to perform the control to maintain the state in which the clutch position of the friction clutch is at a clutch position between the first clutch position and the second clutch position at the time of a shift change while the vehicle is running.

Still further, the control unit is configured to shift the clutch position of the friction clutch up to the second clutch position at the time of a shift change while the vehicle is running.

Yet further, preferably the control unit is configured to hold the clutch position of the friction clutch at a specific position between the first clutch position and the second clutch position for a prescribed period of time at the time of a shift change while the vehicle is running.

Preferably, the control unit is configured to perform an operation to shift the clutch position of the friction clutch first to the engaged side and then to the disengaged side within a range between the first clutch position and the second clutch position at the time of a shift change while the vehicle is running.

Further, preferably the control unit is configured to change a speed at which the friction clutch is engaged or disengaged at the time of a shift change while the vehicle is running.

According to another preferred embodiment, the vehicle further comprises a gear position sensor for detecting a gear position in the dog clutch gearbox, wherein the control unit is configured to detect an engaged state in which the engaging projections are engaged with the engaging recesses based on the gear position sensor and to engage the friction clutch when dog abutment state transfers to the engaged state at the time of a shift change while the vehicle is running.

Preferably, the control unit is configured to store a preset specific period of time as a period of time for which the dog abutment transfers to the engaged state, and to engage the friction clutch when the specific period of time elapses at the time of a shift change while the vehicle is running.

According to a further preferred embodiment, the vehicle further comprises: a gear position sensor for detecting a gear position in the dog clutch gearbox, wherein the control unit is configured to shift the clutch position of the friction clutch to the second clutch position at which the friction clutch is in a mechanical maximum disengaged state when the vehicle is stopped and when the dog clutch gearbox is in a gear-in state and the engine is being driven, and to detect an engaged state in which the engaging projections are engaged with the engaging recesses based on the gear position sensor, and to engage the friction clutch before the clutch position of the friction clutch reaches the second clutch position when the engaged state is established while the clutch position of the friction clutch is on a disengaged side from the first clutch position at the time of a shift change while the vehicle is running.

Preferably, the vehicle being a saddle-type vehicle.

Further, preferably the automatic shift device has a hydraulic cylinder for generating hydraulic pressure, and wherein the friction clutch is engaged and disengaged by hydraulic pressure which the actuator generates by driving the hydraulic cylinder.

According to yet another preferred embodiment, the vehicle further comprises: a shift shaft which is rotated by power of the actuator; a clutch transmitting mechanism for engaging and disengaging the friction clutch in synchronization with the rotation of the shift shaft; and a gearbox transmitting mechanism for performing a gear change in the dog clutch gearbox in synchronization with the rotation of the shift shaft, wherein, at the time of a shift change, the gearbox transmitting mechanism is driven to perform a gear change in the dog clutch gearbox after the actuator has been driven to rotate the shift shaft, and the clutch transmitting mechanism has been driven to shift the clutch position of the friction clutch to a clutch position on the disengaged side from a first clutch position as a clutch position at which a half clutch state finishes, and then the clutch transmitting mechanism is driven to engage the friction clutch, and wherein the clutch position of the friction clutch is maintained at a clutch position between the first clutch and a second clutch position at which the friction clutch is in a mechanical maximum disengaged state at the time of a shift change during running.

Preferably, the clutch transmitting mechanism is a ball cam mechanism for converting the rotating movement of the shift shaft into reciprocating movement to engage and disengage the clutch, having: a first cam plate having a first cam groove and rotatable together with the shift shaft; a second cam plate having a second cam groove and arranged opposed to the first cam plate; and a ball interposed between the first and second cam grooves and held between the first and second cam plates, and wherein the clutch position of the friction clutch reaches a clutch position between the first clutch position and the second clutch position when the distance between the first cam plate and the second cam plate becomes maximum.

Further, preferably the vehicle being a saddle-type vehicle.

The objective according to a method aspect is further solved by a method to control an automatic shift device of a vehicle including automatically engaging and disengaging a friction clutch of the shift device and performing a gear change in a dog-clutch gearbox of the shift device, wherein the friction clutch is maintained in a state in which the clutch position is between a first clutch position, at which a half-clutch state finishes, and a second clutch position, at which the clutch is in a mechanical maximum disengaged state, at the time of a shift change.

In the following, the present invention is explained in greater detail with respect to several embodiments thereof in conjunction with the accompanying drawings, wherein:
- FIG. 1: is a side view of a two-wheeled motor vehicle according to a first embodiment.
- FIG. 2: is a configuration diagram of a driving system of the two-wheeled motor vehicle shown in FIG. 1,
- FIG. 3: is a perspective view illustrating shift gears constituting a dog clutch gearbox,
- FIG. 4: is a block diagram illustrating the entire configuration of a control system mounted on the two-wheeled motor vehicle,
- FIG. 5: is a block diagram illustrating a driving system device group,
- FIG. 6: is a block diagram illustrating a sensor/switch group,
- FIG. 7: is a flowchart showing a shift change control process,
- FIG. 8: is a view illustrating a change in clutch position with time at the time of a shift change,
- FIG. 9: is a view illustrating a change in clutch position with time at the time of a shift change in a two-wheeled motor vehicle according to a second embodiment,
- FIG. 10: is a view illustrating a change in clutch position with time at the time of a shift change in a two-wheeled motor vehicle according to a third embodiment,
- FIG. 11: is a view illustrating a change in clutch position with time at the time of a shift change in a two-wheeled motor vehicle according to a fourth embodiment,
- FIG. 12: is a view illustrating a change in clutch position with time at the time of a shift change in a two-wheeled motor vehicle according to a fifth embodiment,
- FIG. 13: is a view illustrating the general configuration of an automatic shift device provided in a two-wheeled motor vehicle according to a sixth embodiment, and
- FIG. 14: is a cross-sectional view illustrating a clutch transmitting mechanism shown in FIG. 13.

### Description of Reference Numerals:

- 10:: two-wheeled motor vehicle
- 28:: engine unit
- 43:: shift switch
- 43a:: shift up switch
- 43b:: shift down switch
- 54:: clutch (friction clutch)
- 54c:: friction plate
- 54d:: clutch plate
- 55:: main shaft
- 57, 59:: shift gear
- 57a:: first gear
- 57b:: second gear
- 57c:: engaging projection
- 57e:: engaging recess
- 63:: clutch actuator (actuator)
- 64:: hydraulic pressure transmitting mechanism 64
- 64a:: hydraulic cylinder
- 65:: shift actuator
- 70:: gear position sensor
- 80:: gearbox (dog clutch gearbox)
- 100:: ECU (control unit)

As described above, dog abutment is resolved by adjusting the torque of the shift actuator in a prior art. However, even this technique cannot always correct the angle offset between the gears and engage them with each other reliably. Here, in a shift change operation, the friction clutch is first disengaged beyond a clutch position at which the half clutch state finishes (first clutch position) and then a gear change is made. The present inventors found that even when the friction clutch is disengaged beyond the first clutch position, a small amount of driving force is transmitted to a driven-side clutch boss of the friction clutch. Then, the present inventors found that the small amount of driving force transmitted to the clutch boss can be used to resolve dog abutment and have accomplished the present invention.

Description is hereinafter made of the embodiments in detail with reference to the drawings.

### First Embodiment

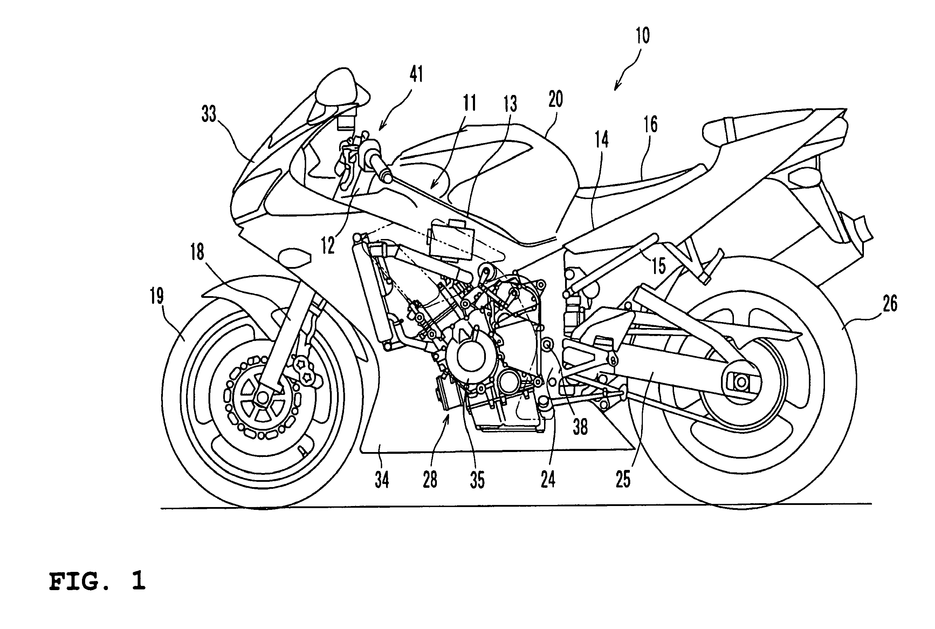

As shown in FIG. 1, the vehicle according to this embodiment is a two-wheeled motor vehicle 10. The two-wheeled motor vehicle 10 has a body frame 11 which forms the skeleton thereof and a seat 16 on which a rider can be seated. The rider seated on the seat 16 straddles the body frame 11 to be on the vehicle. In the present teaching, the shape of the vehicle is not limited to the one shown in FIG. 1, and the maximum speed, displacement and size of the vehicle are not limited. Although the two-wheeled motor vehicle 10 according to this embodiment is so-called a motorcycle type two-wheeled motor vehicle having a fuel tank 20 in front of the seat 16, the two-wheeled motor vehicle according to the present teaching may be a two-wheeled motor vehicle of a different type. Also, the vehicle according to the present teaching is not limited to a two-wheeled motor vehicle and may be a saddle-type vehicle of a different type such as a four-wheeled buggy. Moreover, the vehicle according to the present teaching is not limited to a saddle-type vehicle such as a two-wheeled motor vehicle and may be a vehicle of a different type such as a two-seater four-wheeled buggy.

In the following description, front, rear, right and left refer to the directions as viewed from a rider seated on the seat 16. The body frame 11 has a steering head pipe 12, a main frame 13 extending rearward and obliquely downward from the steering head pipe 12, right and left seat rails 14 extending rearward and obliquely upward from an intermediate portion of the main frame 13, and right and left seat pillar tubes 15 each connected to the rear end of the main frame 13 and an intermediate portion of the corresponding seat rail 14.

A front wheel 19 is supported by the steering head pipe 12 via a front fork 18. The seat 16 is supported on the seat rails 14. The seat 16 extends from a position on the fuel tank 20 toward the rear ends of the seat rails 14. The fuel tank 20 is placed on the front halves of the seat rails 14.

A pair of right and left rear arm brackets 24 are provided at the rear end of the main frame 13. Here, the rear arm brackets 24 and so on provided on the main frame 13 form a part of the body frame 11.

The rear arm brackets 24 protrude downward from the rear end of the main frame 13. The rear arm brackets 24 have a pivot shaft 38, and the front end of a rear arm 25 is swingably supported by the pivot shaft 38. A rear wheel 26 is supported at the rear end of the rear arm 25.

An engine unit 28 for driving the rear wheel 26 is also supported by the body frame 11. A crankcase 35 is suspended from and supported by the main frame 13. In this embodiment, the engine unit 28 has a gasoline engine (not shown). The engine of the engine unit 28 is not limited to an internal combustion engine, such as a gasoline engine, and may be a motor engine or the like. Also, the engine may be a combination of a gasoline engine and a motor engine.

The two-wheeled motor vehicle 10 has a front cowling 33 and right and left leg shields 34. The leg shields 34 are cover members for covering front parts of the rider's legs.

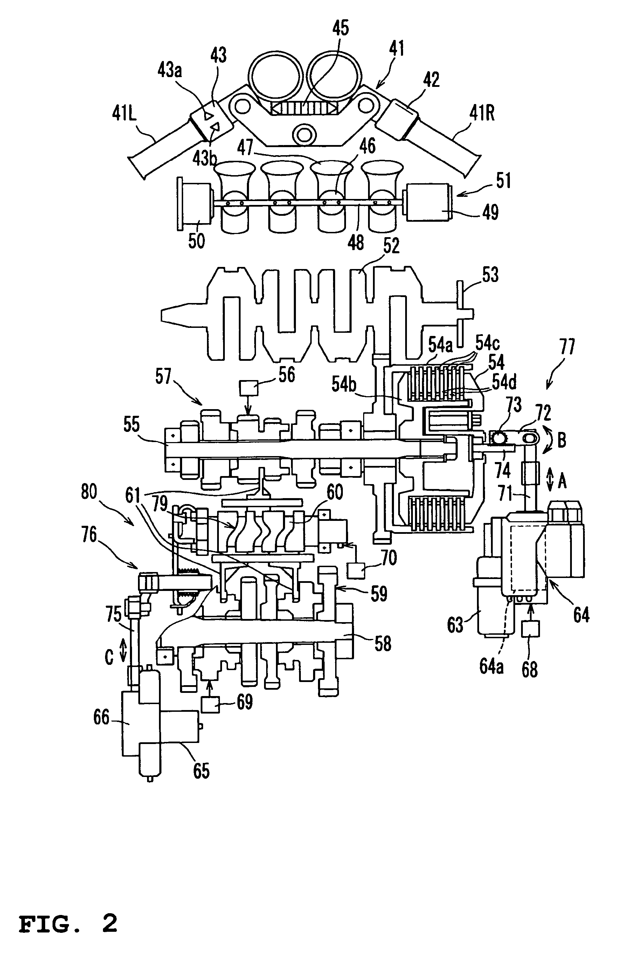

A brake pedal is provided at a lower right part of the two-wheeled motor vehicle 10 although not shown in FIG. 1. The brake pedal is used to stop the rear wheel 26. The front wheel 19 is stopped by operating a brake lever (not shown) provided in the vicinity of a right grip 41 R (see FIG. 2) of handlebars 41.

FIG. 2 is a configuration diagram of a driving system of the two-wheeled motor vehicle shown in FIG. 1. The right grip 41 R of the handlebars 41 (see also FIG. 1) constitutes an accelerator grip, and a throttle input sensor 42 is attached to the accelerator grip. The throttle input sensor 42 detects an accelerator input (throttle opening input) by the rider. A shift switch 43 is provided on the side of the left grip 41 L on the handlebars 41. The shift switch 43 has a shift up switch 43a and a shift down switch 43b, and can change the shift position between neutral and top gear position (sixth gear position in this embodiment) by manual operation to increase or decrease the speed. Also, at the center of the handlebars 41, an indicator 45 for indicating the current shift position and so on is provided.

Throttle valves 46 are attached to throttles 47 forming an air intake passage. A throttle driving actuator 49 is provided at the right end of a valve shaft 48 for the throttle valves 46, and a throttle opening sensor 50 is provided at the left end of the valve shaft 48. The throttle driving actuator 49 and the throttle opening sensor 50 attached to the valve shaft 48 constitute a DBW (drive-by-wire) 51. The DBW 51 opens or closes the throttles 47 with the throttle driving actuator 49 depending on the results of detection by the throttle opening sensor 50.

An engine rotational speed sensor 53 is provide at the right end of a crankshaft 52 connected to the engine (not shown). The crankshaft 52 is connected to a main shaft 55 via a wet multiple plate clutch 54. The clutch 54 has a clutch housing 54a and a clutch boss 54b. A plurality of friction plates 54c are attached to the clutch housing 54a, and a plurality of clutch plates 54d are attached to the clutch boss 54b. Each of the clutch plates 54d is placed between adjacent friction plates 54c and 54c. In the present embodiments, the friction clutch is not limited to a wet multiple plate clutch and may be a dry clutch or a single plate clutch, for example. A plurality of (six in FIG. 2) shift gears 57 are mounted on the main shaft 55, and a main shaft rotational speed sensor 56 is attached to the main shaft 55. The shift gears 57 mounted on the main shaft 55 are in meshing engagement with shift gears 59 mounted on a drive shaft 58 disposed parallel to the main shaft 55. In FIG. 2, the shift gears 57 and the shift gears 59 are separated for convenience of explanation.

Both or either the shift gears 57 and/or the shift gears 59 are mounted on the main shaft 55 or the drive shaft 58 in such a manner as to idle relative thereto except for selected gears. Therefore, transmission of driving force from the main shaft 55 to the drive shaft 58 is made only through a pair of selected shift gears. The state in which a pair of shift gears 57 and 59 are in meshing engagement with each other to allow transmission of driving force from the main shaft 55 to the drive shaft 58 is referred to as "gear-in state" in the present teaching.

The operation to select a shift gear 57 and a shift gear 59 for a gear change is carried out by a shift cam 79. The shift cam 79 has a plurality of (three in FIG. 2) cam grooves 60, and a shift fork 61 is received in each cam groove 60. Each shift fork 61 is engaged with specific shift gears 57 and 59 on the main shaft 55 and the drive shaft 58. When the shift cam 79 rotates, the shift forks 61 move axially along the cam grooves 60, and, in synchronization with that, the specific shift gears 57 and 59 in spline engagement with the main shaft 55 and the drive shaft 58 are moved axially. Then, when the shift gears 57 and 59 moved axially are engaged with other shift gears 57 and 59 mounted on the main shaft 55 and the drive shaft 58 in such a manner as to idle relative thereto, a gear change is carried out. The shift gears 57 and 59, and the shift cam 79 constitute a gearbox 80.

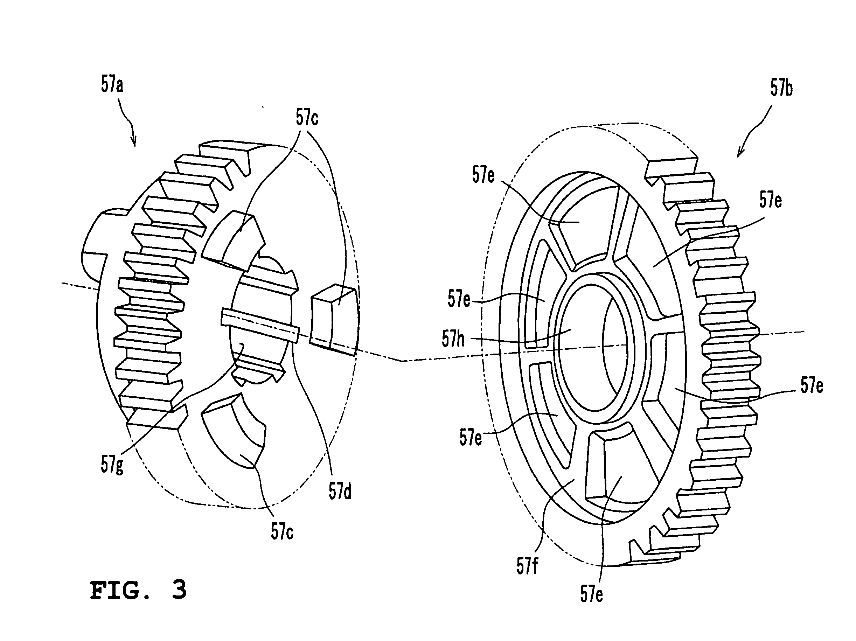

The gearbox 80 is a dog clutch gearbox, and has a first gear 57a with engaging projections 57c on its end face and a second gear 57b with engaging recesses 57e in its end face facing the engaging projection 57c as shown in FIG. 3 as the shift gears 57. The gearbox 80 has a plurality of first gears 57a and second gears 57b. The gearbox 80 has a plurality of first gears with engaging projections and a plurality of second gears with engaging recesses as the shift gears 59. Their description is omitted, though, since they are the same in configuration as the first gear 57a and the second gear 57b, respectively, shown in FIG. 3. Each of the first gears 57a has three engaging projections 57c, and the engaging projections 57c are arranged circumferentially at equal intervals on the end face of the first gear 57a along its outer periphery. Each of the second gears 57b has six engaging recesses 57e, and the engaging recesses 57e are also arranged circumferentially at equal intervals.

Each of the first gears 57a has an insertion hole 57g at its center, through which the main shaft 55 or the drive shaft 58 extends, and a plurality of grooves 57d are formed in the peripheral surface of the insertion hole 57g. The first gears 57a are in spline engagement with the main shaft 55 or the drive shaft 58. Each of the second gears 57b also has an insertion hole 57h, through which the main shaft 55 or the drive shaft 58 extends, but the insertion hole 57h has no groove. Therefore, the second gears 57b are mounted on the main shaft 55 or the drive shaft 58 in such a manner as to idle relative thereto.

When the shift cam 79 (see FIG. 2) rotates, the shift forks 61 move along the cam grooves 60, and, in synchronization with that, the first gears 57a are moved axially along the splines of the main shaft 55 or the drive shaft 58. Then, when the engaging projections 57c of the first gears 57a are engaged with the engaging recesses 57e of the second gears 57b, the combination of the shift gears 57 and 59 which transmit driving force from the main shaft 55 to the drive shaft 58 is changed to carry out a gear change.

When the shift cam 79 (see FIG. 2) rotates and the first gears 57a are moved axially, a dog abutment state in which the engaging projections 57c of the first gears 57a are not engaged with the engaging recesses 57e of the second gears 57b but abut on end faces 57f of the second gears 57b may occur. In this dog abutment state, the first gears 57a and the second gears 57b are not engaged but abut on each other and the gear change is not carried out completely.

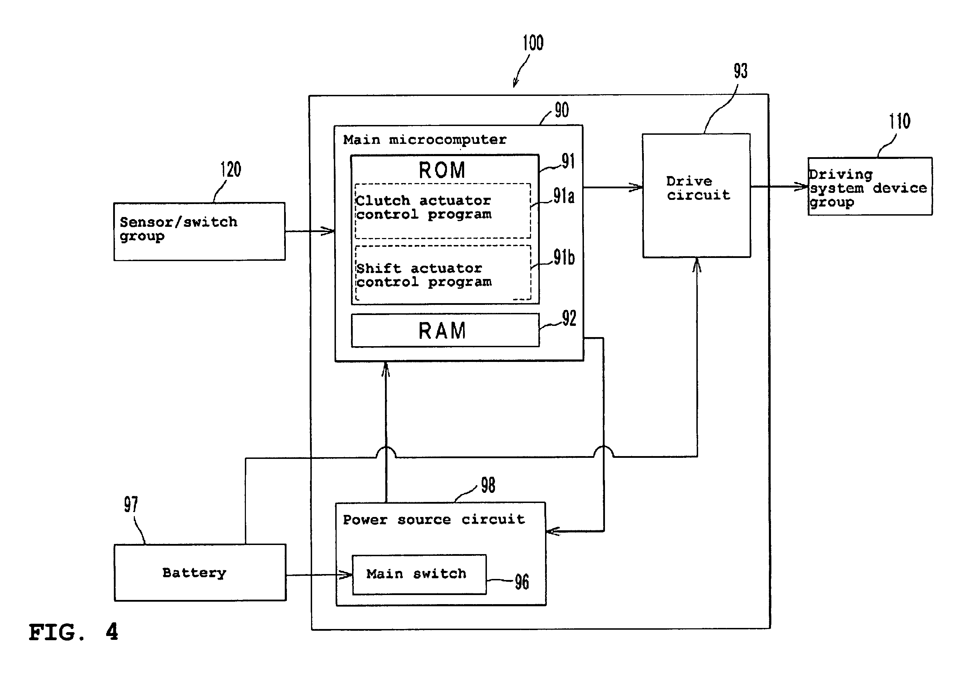

As shown in FIG. 2, the clutch 54 and the gearbox 80 are driven by a clutch actuator 63 and a shift actuator 65, respectively. The clutch actuator 63 is connected to the clutch 54 via a hydraulic pressure transmitting mechanism 64, a rod 71, a lever 72, a pinion 73 and a rack 74. The hydraulic pressure transmitting mechanism 64 is a mechanism which has a hydraulic cylinder 64a, an oil tank (not shown), a piston (not shown) and so on, and which is driven by the clutch actuator 63 to generate hydraulic pressure and transmits the hydraulic pressure to the rod 71. When the rod 71 is driven by the clutch actuator 63 to reciprocate as indicated by the arrow A, the lever 72 rotates as indicated by the arrow B, whereby the clutch 54 is engaged or disengaged depending on the moving direction of the rack 74. Although an electric motor is employed as the clutch actuator 63 in this embodiment, the present teaching is not limited thereto. For example, a solenoid or an electromagnetic valve may be used. Also, an automatic shift control device in the present teaching is constituted of: an automatic clutch device 77 having the clutch 54, the clutch actuator 63, the hydraulic pressure transmitting mechanism 64, the rod 71, the lever 72, the pinion 73 and the rack 74; the gearbox 80; the shift actuator 65; a reduction mechanism 66; a rod 75; a link mechanism 76; and an ECU 100 (see FIG. 4) for drive control of the clutch actuator 63 and shift actuator 65.

The shift actuator 65 is connected to the shift cam 79 via the reduction mechanism 66, the rod 75 and the link mechanism 76. The reduction mechanism 66 has a plurality of reduction gears (not shown). At the time of a gear change, the rod 75 is driven by the shift actuator 65 to reciprocate as indicated by the arrow C, and the shift cam 79 is rotated by a specific angle via the link mechanism 76. The shift forks 61 thereby move axially a specific distance along the cam grooves 60, and a pair of shift gears 57 and 59 are fixed to the main shaft 55 and the drive shaft 58, respectively. Then, driving force is transmitted from the main shaft 55 to the drive shaft 58. Although an electric motor is employed as the shift actuator 65 in this embodiment, the present teaching is not limited thereto. For example, a solenoid or an electromagnetic valve may be used.

The hydraulic pressure transmitting mechanism 64 connected to the clutch actuator 63 has a clutch position sensor 68 which detects the stroke position of the piston to detect the clutch position (the distance between the friction plates 54c and the clutch plates 54d). Although the clutch position sensor 68 detects the stroke position of the piston to detect the clutch position in this embodiment, the present teaching is not limited thereto. The position of a transmitting mechanism disposed between the clutch actuator 63 and the clutch 54 may be detected. For example, the position of the rod 71 or the rack 74 may be detected. The clutch position is not necessarily obtained indirectly from a detected stroke position of the piston as in this embodiment. The distance between the friction plates 54c and the clutch plates 54d may be directly measured with a sensor. Also, a vehicle speed sensor 69 is provided on the drive shaft 58. In addition, a gear position sensor 70 for detecting the gear position (the amount of rotation of the shift cam) is provided on the shift cam 79.

A shift change is carried out when an ECU 100 (engine control unit), which is described later, performs drive control of the clutch actuator 63 and the shift actuator 65 in response to an operation of the shift up switch 43a or the shift down switch 43b. More specifically, a series of operations: disengagement of the clutch 54 by the clutch actuator 63 → gear change of the shift gears 57 and 59 by the shift actuator 65 → engagement of the clutch 54 by the clutch actuator 63, is performed based on a specific program or map.

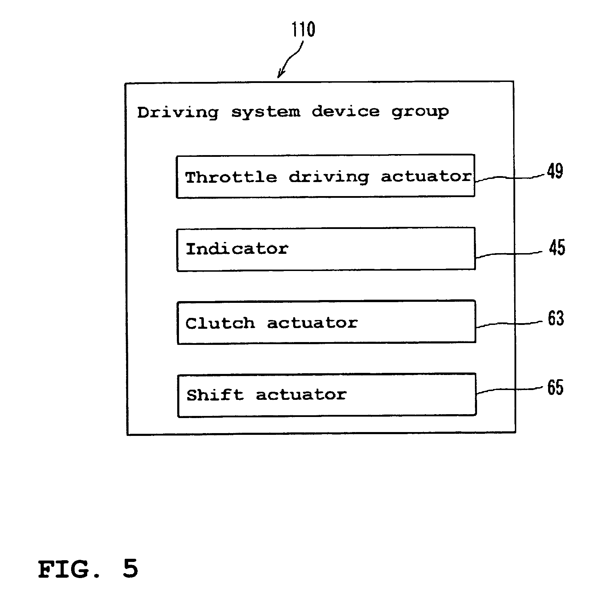

FIG. 4 is a block diagram illustrating the entire configuration of a control system mounted on the two-wheeled motor vehicle 10. A driving system device group 110 is connected to a main microcomputer 90 of ECU 100 via a drive circuit 93. The ECU 100 corresponds to the control unit in the present embodiment. The driving system device group 110 consists of the throttle driving actuator 49, the indicator 45, the clutch actuator 63 and the shift actuator 65 (see also FIG. 2) as shown in FIG. 5.

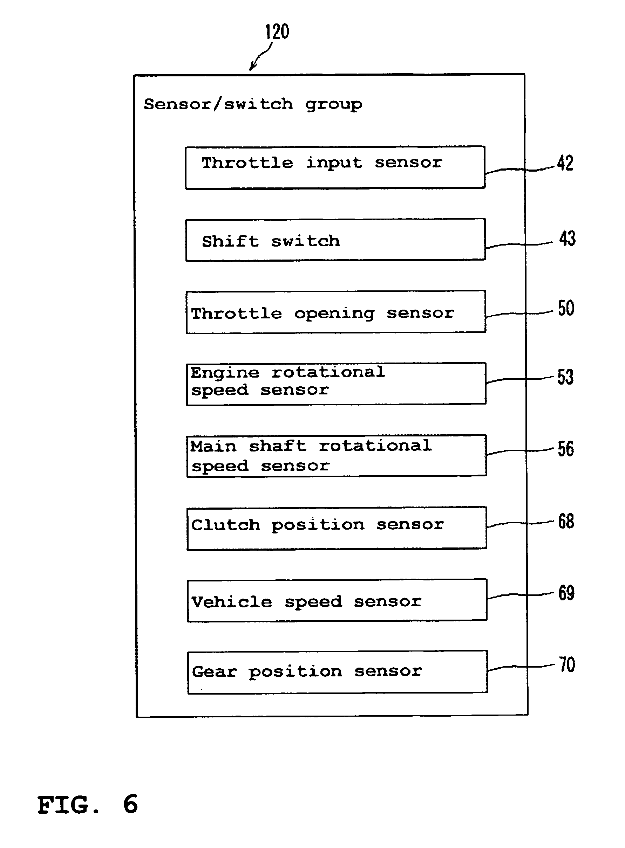

The drive circuit 93 supplies appropriate currents to the devices forming the driving system device group 110 from a battery 97 in response to a drive signal fed from the main microcomputer 90. A sensor/switch group 120 is also connected to the main microcomputer 90. The sensor/switch group consists of the throttle input sensor 42, the shift switch 43, the throttle opening sensor 50, the engine rotational speed sensor 53, the main shaft rotational speed sensor 56, the clutch position sensor 68, the vehicle speed sensor 69 and the gear position sensor 70 as shown in FIG. 6 (see also FIG. 2), and the results of detections by the sensors are inputted into the main microcomputer 90. The main microcomputer 90 feeds drive signals to the devices forming the driving system device group 110 based on the results of detections received from the sensors to perform drive control of them.

The main microcomputer 90 has a ROM 91 and a RAM 92. A clutch actuator control program 91 a and a shift actuator control program 91 b are stored in the ROM 91. The clutch actuator control program 91 a is a program for drive control of the clutch actuator 63. The shift actuator control program 91 b is a program for drive control of the shift actuator 65. The programs stored in the ROM 91 are not deletable, and a new program and so on cannot be written into the ROM 91.

When the clutch actuator control program 91 a or the shift actuator control program 91 b is executed, the program is expanded on the RAM 92 and then read into the main microcomputer 90. Then, the main microcomputer 90 performs drive control of the clutch actuator 63 or the shift actuator 65 based on the program expanded on the RAM 92.

A power source circuit 98 connected to the battery 97 has a main switch 96 which is switched on or off in synchronization with a key switch (not shown). When the main switch 96 is switched on, the power source circuit 98 converts the voltage from the battery 97 into a voltage for driving the main microcomputer 90 and supplies it to the main microcomputer 90.

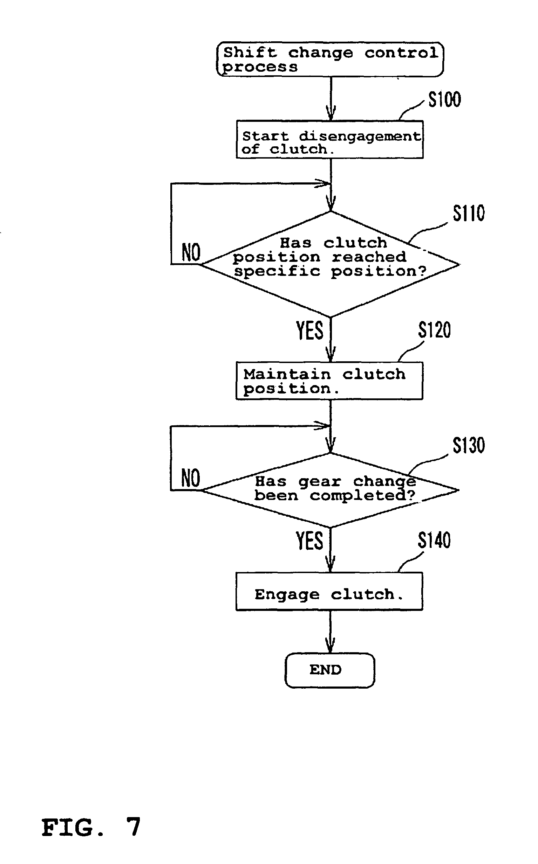

Next, a shift change operation (shift up operation or shift down operation) while the two-wheeled motor vehicle 10 shown in FIG. 1 to FIG. 6 is running is described. FIG. 7 is a flowchart showing a shift change control process. The shift change process is called up from a main routine being executed in advance and executed in response to a shift change operation, that is, the fact that the shift up switch 43a or shift down switch 43b is operated. The shift change control process shown in FIG. 7 is executed at the time of a shift change to every gear position.

First, the ECU 100 starts disengagement of the clutch 54 in a step S100. In this process, the ECU 100 feeds a drive signal to the clutch actuator 63 to cause the clutch actuator 63 to start disengagement of the clutch 54. When disengagement of the clutch 54 is started, the friction plates 54c and the clutch plates 54d of the clutch 54 move apart from each other at a constant speed.

When the process in the step S100 is executed, it is determined whether or not the clutch position has reached a specific position in a step S110. In this process, the ECU 100 determines whether or not the clutch position of the clutch 54 had reached a specific position based on the result of detection by the clutch position sensor 68 (see FIG. 2). If it is determined that the clutch position has not reached the specific position, the ECU 100 returns the process to the step S110 and waits until the clutch position reaches the specific position.

If it is determined that the clutch position has reached a specific position in the step S110, a process to maintain the clutch position is next performed in a step S120. In this embodiment, the process to maintain the clutch position is a process to hold the clutch position at a fixed position. In this process, the ECU 100 stops the feed of drive signal to the clutch actuator 63 to stop the clutch actuator 63. The clutch position is thereby held at a specific position determined in the step S110. While the clutch position is being held, part of engine driving force is transmitted to the clutch boss 54b, and, if dog abutment is occurring between the first gears 57a and the second gears 57b, the first gears 57a and the second gears 57b rotate relative to each other while staying in contact with each other.

When the process in the step S120 is executed, it is next determined whether or not a gear change has been completed in a step S130. In this process, the ECU 100 determines whether or not a gear change has been completed based on the result of detection by the gear position sensor 70 (see FIG. 2 and FIG. 6). If it is determined that a gear change has not been completed, the ECU 100 returns the process to a step S130 and waits until a gear change is completed. If dog abutment as describe above has occurred, the dog abutment is resolved when it is determined that a gear change is completed by the process in the step S130.

If it is determined that a gear change has been completed in the step S130, a process to engage the clutch is next performed in a step S140. In this process, the ECU 100 feeds a drive signal to the clutch actuator 63 to cause the clutch actuator 63 to engage the clutch 54. When this process is executed, the clutch 54 is engaged at a constant speed until it reaches a specific clutch position. When the process in the step S140 is executed, the shift change control process is ended.

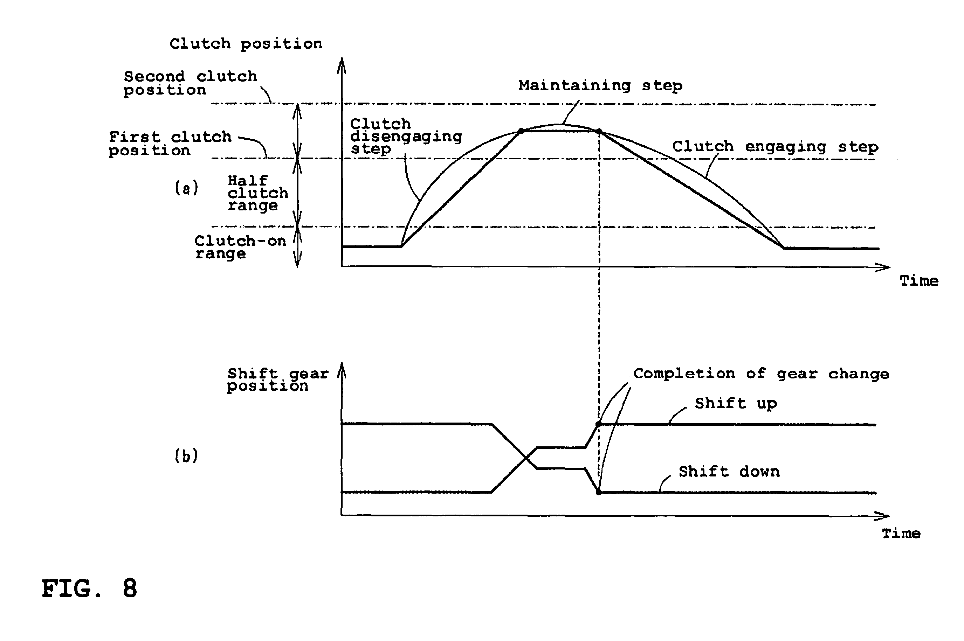

FIG. 8 is a view illustrating a change in the clutch position with time while the shift change control process shown in FIG. 7 is being executed. In FIG. 8(a), the clutch position during the period of time from the start to completion of a shift change is shown. In FIG. 8(b), a change in the shift gear position (gear position) with time during the period of time from the start to completion of a shift up is shown.

As shown in FIG. 8(a), the clutch 54 is disengaged at a constant speed in the clutch disengaging step. Then, when the clutch position of the clutch 54 reaches a specific position between a first clutch position and a second clutch position, the clutch position is held. The first clutch position is a clutch position at which the half clutch state finishes, and is the lower limit of the distance between the friction plates 54c and the clutch plates 54d when the two-wheeled motor vehicle 10 is stopped and idling and when the vehicle body does not move forward and is held stopped. The second clutch position is a clutch position at which the clutch 54 is in a mechanical maximum disengaged state. In the two-wheeled motor vehicle 10 according to the first embodiment, the clutch position of the clutch 54 is held at the second clutch position when the vehicle is stopped and when the gearbox 80 is in the gear-in state and the engine is being driven. When dog abutment is occurring between the shift gears 57a and 57b while the clutch position of the clutch 54 is maintained in a position between the first clutch position and the second clutch position, the shift gears 57a and 57b rotate relative to each other while staying in contact with each other.

Then, when the completion of a gear change is detected by the gear position sensor 70, a clutch engaging step is started. In the clutch engaging step, the clutch 54 is engaged at a constant speed. As described above, in this embodiment, when the clutch position of the clutch 54 reaches a specific position between the first clutch position and the second clutch position in the clutch disengaging step, the clutch position is held. Then, a clutch engaging step is started after the completion of a gear change has been detected. That is, in the clutch disengaging step, the clutch 54 is not disengaged up to the second clutch position.

As described above, in the two-wheeled motor vehicle 10 according to this embodiment, a state in which the clutch position is between the first clutch position (a clutch position at which the half clutch state finishes) and the second clutch position (a clutch position at which the clutch 54 is in a mechanical maximum disengaged state) is maintained during the operation to disengage and engage the clutch 54 at the time of a shift change. Therefore, even if dog abutment occurs between the first gears 57a and the second gears 57b, the dog abutment can be resolved properly. As a result, a gear change can be carried out properly whenever the shift up switch 43a or the shift down switch 43b is operated.

Also, in the two-wheeled motor vehicle 10 according to this embodiment, since the clutch position of the clutch 54 is not disengaged up to the second clutch position during the operation to disengage and engage the clutch 54, the time necessary for the operation to disengage and engage the clutch 54 can be shortened.

Also, in the two-wheeled motor vehicle 10 according to this embodiment, the clutch position of the clutch 54 is held at a specific position between the first clutch position and the second clutch position for a prescribed period of time during the operation to disengage and engage the clutch 54. Therefore, a certain driving force (part of engine driving force) can be applied to the clutch boss 54, and reliability in rotating the first gears 57a and the second gears 57b relative to each other can be improved when dog abutment is occurring.

Also, in the two-wheeled motor vehicle 10 according to this embodiment, a step of engaging the clutch 54 is started in response to the completion of a gear change detected by the gear position sensor 70. Therefore, a step of engaging the clutch 54 can be started quickly after the completion of a gear change, and the time necessary for the operation to disengage and engage the clutch 54 can be shortened.

### Second Embodiment

In the present embodiments, the clutch position of the clutch 54 is maintained between the first clutch position and the second clutch position until a dog abutment state is resolved at the time of a shift change. The manner of change in the clutch position is not limited to the manner shown in FIG. 8, though. To "maintain" in the present embodiments is to keep the clutch position in a positional range between the first clutch position and second clutch position and is not necessary to hold the clutch position at a fixed position. Next, an embodiment with a different manner of maintaining the clutch position is described.

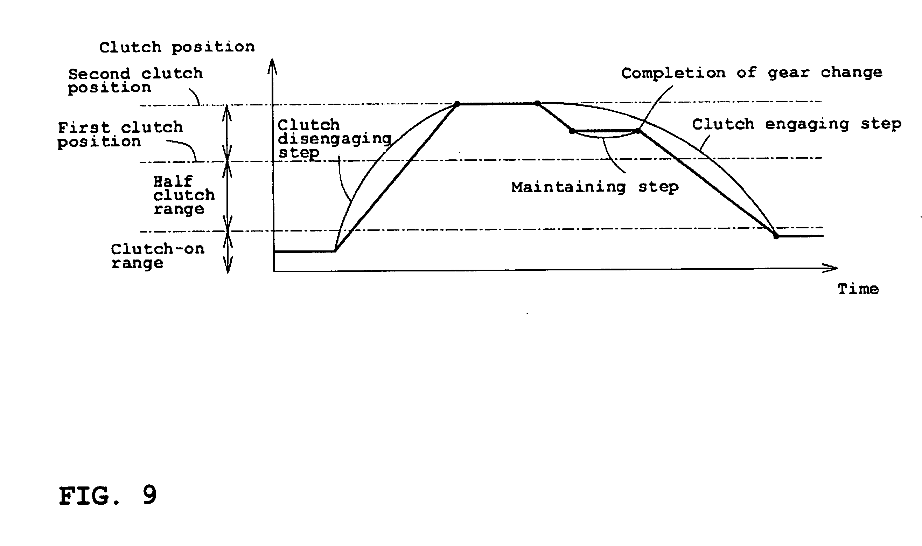

FIG. 9 is a view illustrating a change in clutch position with time at the time of a shift change in a two-wheeled motor vehicle according to a second embodiment. As shown in FIG. 9, in the second embodiment, the clutch 54 is disengaged at a constant speed and held at a second clutch position for a prescribed period of time in the clutch disengaging step, and then a clutch engaging step is started. In the clutch engaging step, the clutch 54 is engaged until the clutch position of the clutch 54 reaches a specific position between the first clutch position and the second clutch position, and then held in the position. Then, when completion of a gear change is detected, the clutch 54 is moved closer until it becomes a clutch-on state.

As shown in FIG. 9, in the two-wheeled motor vehicle according to the second embodiment, the clutch 54 is once disengaged until the clutch position reaches the second clutch position, and then held in the position for a prescribed period of time in the clutch disengaging step. When the shift actuator 65 is configured to start a gear change while the clutch position is held at the second clutch position, the shift gears 57 (shift gears 59) engaged with each other can be separated from each other easily.

### Third Embodiment

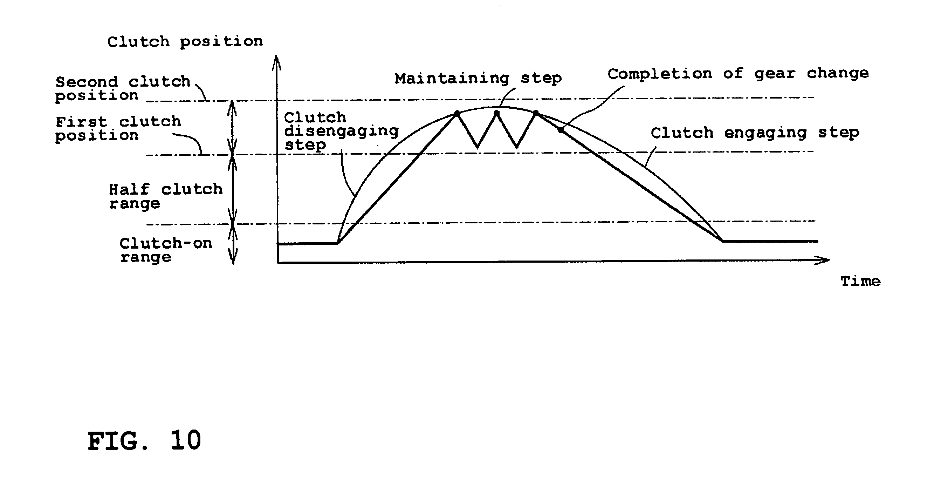

FIG. 10 is a view illustrating a change in clutch position with time at the time of a shift change in a two-wheeled motor vehicle 10 according to a third embodiment. As shown in FIG. 10, in the third embodiment, engagement and disengagement of the clutch 54 is repeated within a range between the first clutch position and the second clutch position after the clutch 54 has been disengaged until the clutch position reaches a specific position between the first clutch position and the second clutch position in the clutch disengaging step. Then, when completion of a gear change is detected, a clutch engaging step is started.

As shown in FIG. 10, in the two-wheeled motor vehicle according to the third embodiment, the clutch position of the clutch 54 is once shifted to the engaged side and then to the disengaged side within a range between the first clutch position and the second clutch position. That is, the clutch position is changed within a range between the first clutch position and the second clutch position such that the driving force (part of engine driving force) to be transmitted to the clutch boss 54b is once increased and then decreased. This embodiment also falls under the same category as the embodiment in which "a state in which the clutch position is between the first clutch position and the second clutch position is maintained." In this embodiment, effects generally the same as those of the first embodiment can be obtained.

### Fourth Embodiment

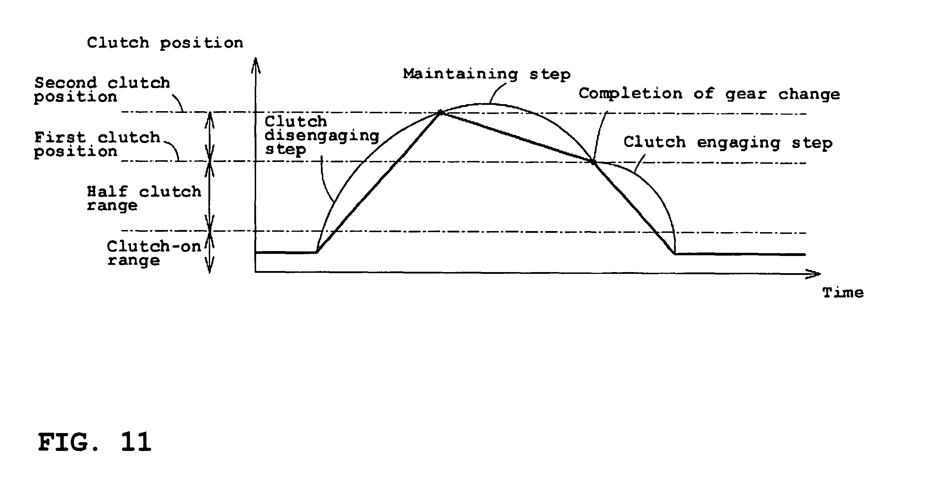

FIG. 11 is a view illustrating a change in clutch position with time at the time of a shift change in a two-wheeled motor vehicle according to a fourth embodiment. As shown in FIG. 11, in the fourth embodiment, the clutch 54 is disengaged until the clutch position reaches the second clutch position in the clutch disengaging step, and then the clutch 54 is engaged at a low speed. Then, when the clutch position of the clutch 54 reaches the first clutch position, the approach speed is increased.

As shown in FIG. 11, in the two-wheeled motor vehicle according to the fourth embodiment, the engaging speed of the clutch 54 is changed so that the clutch 54 can be engaged gradually between the first clutch position and the second clutch position. By decreasing the engaging speed of the clutch 54 as described above, a state in which the clutch position of the clutch 54 is between the first clutch position and the second clutch position is maintained. Therefore, in this embodiment, the effects described before can be obtained.

### Fifth Embodiment

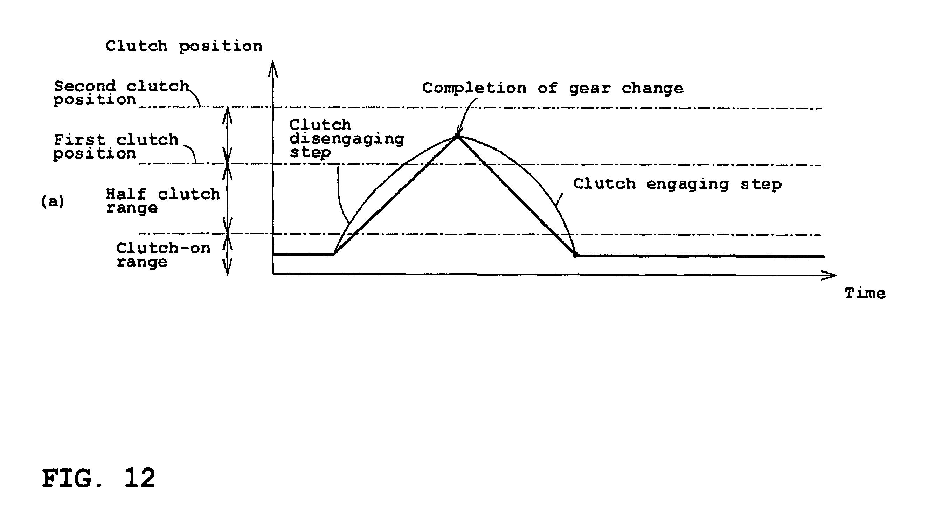

FIG. 12 is a view illustrating a change in clutch position with time at the time of a shift change in a two-wheeled motor vehicle according to a fifth embodiment. As shown in FIG. 12, in the fifth embodiment, when the gear position sensor 70 detects completion of a gear change while the clutch position of the clutch 54 is beyond the first clutch position in the clutch disengaging step, a clutch engaging step is started straight away.

In the fifth embodiment, when the gear position sensor 70 detects completion of a gear change when the clutch position of the clutch 54 has been shifted to the disengaged side beyond the first clutch position during disengagement of the clutch 54, a clutch engaging step is started straight away. When a gear change is completed during disengagement of clutch, there is no need to maintain the clutch 54 between the first clutch position and the second clutch position to resolve dog abutment. Therefore, when a clutch engaging step is started straight away after the detection of completion of a gear change, the time necessary to disengage and engage the clutch 54 can be shortened.

In the above first to fifth embodiments, a case in which the clutch position of the clutch 54 is maintained between the first clutch position and the second clutch position before completion of a gear change is detected by the gear position sensor 70 is described. However, the embodiments are not limited to the aspects in which a gear change is detected and the maintenance of the clutch position is released based on the detection. The period of time for which the above clutch position is maintained may be set in advance. That is, a preset specific period of time may be stored in the ROM 91 or the like as a period of time from when a dog abutment state occurs to when the first gears 57a and the second gears 57b are engaged with each other and the dog abutment state is resolved, and the clutch position may be maintained between the first clutch position and the second clutch position until the period of time elapses. In this configuration, effects generally the same as those of the first embodiment can be obtained.

### Sixth Embodiment

In the above first to fifth embodiments, a case in which the clutch 54 and the gearbox 80 are driven by different actuators (clutch actuator 63 and shift actuator 65) is described. In the present teaching, the clutch and the gearbox may be driven by one actuator, though.

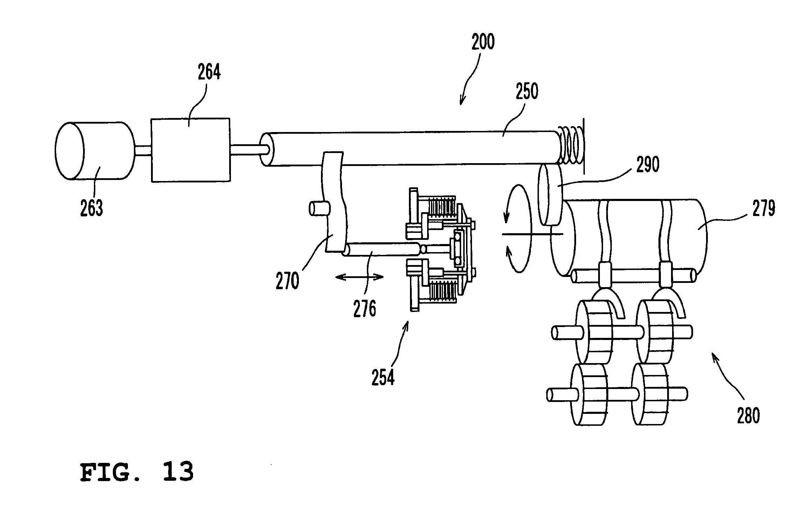

FIG. 13 is a view illustrating a general configuration of an automatic shift device provided in a two-wheeled motor vehicle according to a sixth embodiment. As shown in FIG. 13, in an automatic shift device 200 of the two-wheeled motor vehicle according to the sixth embodiment, engagement and disengagement of a clutch 254 and a gear change in a gearbox 280 are made by one actuator 263. Although the actuator 263 is a motor in this embodiment, the actuator is not limited to a motor and may be a solenoid or an electromagnetic valve in the present teaching.

More specifically, the rotating movement of the actuator 263 is reduced in speed by the reduction mechanism 264 and transmitted to a shift shaft 250 to rotate the shift shaft 250. The rotating movement of the shift shaft 250 is converted into axial reciprocating movement of a push rod 276 by a clutch transmitting mechanism 270, and the clutch 254 is engaged or disengaged by the reciprocating movement of the push rod 276. The rotating movement of the shift shaft 250 is also converted by a gearbox transmitting mechanism 290 into rotating movement of a shift cam 279, by which a gear change in the gearbox 280 is carried out. Although not shown in FIG. 13, the two-wheeled motor vehicle according to the sixth embodiment has a starting centrifugal clutch. The clutch 254 shown in FIG. 13 is a clutch for shift change.

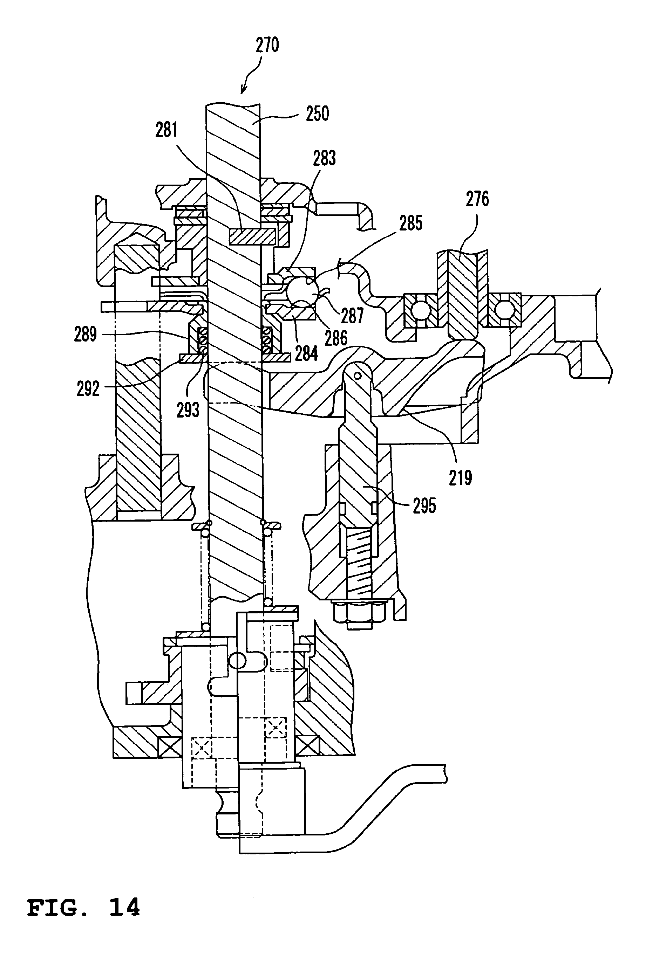

FIG. 14 is a cross-sectional view illustrating a clutch transmitting mechanism 270 shown in FIG. 13. The clutch transmitting mechanism 270 shown in FIG. 14 is a ball cam mechanism for converting the rotation of the shift shaft 250 into reciprocating movement. The clutch transmitting mechanism 270 has: a first cam plate 283 connected to the shift shaft 250 via a connecting pin 281 and rotatable together with the shift shaft 250; a second cam plate 284 facing the first cam plate 283; and three balls 287 (only one of them is shown in FIG. 14) received in first and second cam grooves 285 and 286 formed in the opposed faces of the first cam plate 283 and the second cam plate 284, respectively, and held between the cam plates 283 and 284. The first and second cam plates 283 and 284 both have a disk-like shape. Also, the first cam plate 283 is secured to the shift shaft 250.

The second cam plate 284 is secured to a boss 289 movable in the axial direction of the shift shaft 250, and a pressing plate 292 in contact with a pressure lever 219, which is described later, is secured to the lower end of the boss 289. A compression coil spring 293 is interposed between the pressing plate 292 and the boss 289.

The left end of the pressure lever 219 is in contact with the pressing plate 292, and the right end of the pressure lever 219 is in contact with the push rod 276 (see also FIG. 13). A longitudinal intermediate portion of the pressure lever 219 is supported by a spindle 295. The pressure lever 219 is swingable about the contact point between it and the spindle 295.

When the shift shaft 250 rotates in synchronization with the rotation of the actuator 263 (see FIG. 13), the first cam plate 283 also rotates in synchronization with the shift shaft 250. Since the second cam plate 284 does not rotate in synchronization with the shift shaft 250, the first cam plate 283 rotates relative to the second cam plate 284. At this time, the balls 287 move circumferentially in the cam groove 286 of the second cam plate 284 while being maintained in the cam groove 285 of the first cam plate 283. When the shift shaft 250 further rotates, the balls 287 roll over the cam groove 286 and get out of the cam groove 286. When the balls 287 get out of the cam groove 286, the second cam plate 284 is moved along the axis direction of the shift shaft 250, whereby the left end of the pressure lever 219 is pressed by the boss 289. When the left end of the pressure lever 219 is pressed by the boss 289, the pressure lever 219 swings about the contact point between it and the spindle 295, whereby the push rod 276 is pressed by the right end of the pressure lever 219. Then, when the push rod 276 is pressed by the pressure lever 219, the clutch 254 is disengaged.

When the balls 287 roll over the cam groove 286 and get out of the cam groove 286, the distance between the first cam plate 283 and the second cam plate 284 is maximum. At this time, the distance between the friction plates and clutch plates of the clutch 254 is maximum. In this embodiment, the clutch transmitting mechanism 270 is configured such that the clutch position at the time when the clutch 254 is in the maximum disengaged state is located at a position between the first clutch position and the second clutch position.

Although the clutch position is maintained between the first clutch position and the second clutch position by performing drive control of the clutch actuator 63 in the first to fifth embodiments, the clutch position at the time when the clutch 254 is in a mechanical maximum disengaged state is located at a position between the first clutch position and the second clutch position in the sixth embodiment. Also in the sixth embodiment, since the clutch position is maintained between the first clutch position and the second clutch position for a prescribed period of time, effects generally the same as those of the first embodiment can be obtained.

In the clutch, the distance between the friction plates and the clutch plates at the time when half clutch is started and when a complete disengaged state is established may change because of wear, deterioration and so on of the friction plates and the clutch plates. Therefore, the first clutch position and the second clutch position may change because of wear, deterioration and so on of the friction plates and the clutch plates. Also, the first clutch position and the second clutch position are different in different clutches. Therefore, it is preferred in the present teaching that the friction clutch be engaged gradually while the clutch position is maintained at a specific position between preset first and second clutch positions. Then, since the clutch position can be maintained between the first clutch position and the second clutch position for a prescribed period of time even when the clutch has been worn or deteriorated or when there are varieties among clutches, possible occurrence of dog abutment can be resolved properly.

In the present teaching, the control to maintain the clutch position of the friction clutch between the first clutch position and the second clutch position is not necessarily performed at every shift change and may be performed only at some of them. For example, the above control may be performed only at the time of a shift change to a specific gear position (for example, first or second gear position).

As has been described previously, the present teaching is useful for an automatic shift control device and a vehicle.

The description above discloses (amongst others), an embodiment of an automatic shift control device, which is an automatic shift control device mounted on a vehicle provided with an engine, including: a friction clutch; a dog clutch gearbox which has a plurality of first gears each having engaging projections, and a plurality of second gears each having engaging recesses engageable with the engaging projections, and in which a gear change is made when the engaging projections of each first gear are engaged with any engaging recesses of each second gear; an automatic shift device with an electric actuator for engaging and disengaging the friction clutch and performing a gear change in the dog clutch gearbox; and a control unit which, at the time of a shift change, controls the actuator to shift a clutch position of the friction clutch to a clutch position on the disengaged side from a first clutch position as a clutch position at which a half clutch state finishes, and engages the friction clutch after a gear change, in which the control unit shifts the clutch position of the friction clutch to a second clutch position at which the friction clutch is in a mechanical maximum disengaged state when the vehicle is stopped and when the dog clutch gearbox is in a gear-in state and the engine is being driven, and performs a control to maintain a state in which the clutch position of the friction clutch is at a clutch position between the first clutch position and the second clutch position at the time of a shift change while the vehicle is running.

According to the above embodiment of an automatic shift control device, the friction clutch is maintained in a state in which the clutch position is between the first clutch position and the second clutch position at the time of a shift change. Therefore, even if dog abutment is occurring, it can be resolved. As a result, a gear change can be carried out properly whenever a shift change operation is conducted and there is no need to conduct a shift change operation many times.

Further, another embodiment of an automatic shift control device is disclosed, which is an automatic shift control device mounted on a vehicle provided with an engine, including: a friction clutch; a dog clutch gearbox which has a plurality of first gears each having engaging projections, and a plurality of second gears each having engaging recesses engageable with the engaging projections, and in which a gear change is made when the engaging projections of each first gear are engaged with any engaging recesses of each second gear; an automatic shift device with an electric actuator for engaging and disengaging the friction clutch and performing a gear change in the dog clutch gearbox; a control unit which, at the time of a shift change, controls the actuator to change the state of the friction clutch so that a clutch position of the friction clutch reaches a clutch position on the disengaged side from a first clutch position as a clutch position at which a half clutch state finishes, and engages the friction clutch after a gear change; and a gear position sensor for detecting a gear position in the dog clutch gearbox, in which the control unit shifts the clutch position of the friction clutch to a second clutch position at which the friction clutch is in a mechanical maximum disengaged state when the vehicle is stopped and when the dog clutch gearbox is in a gear-in state and the engine is being driven, and detects an engaged state in which the engaging projections are engaged with the engaging recesses based on the gear position sensor, and engages the friction clutch before the clutch position of the friction clutch reaches the second clutch position when the engaged state is established while the clutch position of the friction clutch is on a disengaged side from the first clutch position at the time of a shift change while the vehicle is running.

According to the above embodiment of an automatic shift control device, when the gears are engaged with each other during an operation to disengage the friction clutch, an engaging operation is started before the clutch position reaches the second clutch position. Therefore, the operation to disengage and engage the clutch can be shortened.

According to the present teaching, in an automatic shift control device provided with an automatic shift device for automatically engaging and disengaging a clutch and performing a gear change in a gearbox, a gear change can be carried out properly whenever a shift change operation is conducted.

The description above further discloses, according to a first preferred aspect, an automatic shift control device mounted on a vehicle provided with an engine, comprising: a friction clutch; a dog clutch gearbox which has a plurality of first gears each having engaging projections, and a plurality of second gears each having engaging recesses engageable with the engaging projections, and in which a gear change is made when the engaging projections of each first gear are engaged with any engaging recesses of each second gear; an automatic shift device with an electric actuator for engaging and disengaging the friction clutch and performing a gear change in the dog clutch gearbox; and a control unit which, at the time of a shift change, controls the actuator to shift a clutch position of the friction clutch to a clutch position on the disengaged side from a first clutch position as a clutch position at which a half clutch state finishes, and engages the friction clutch after a gear change, wherein the control unit shifts the clutch position of the friction clutch to a second clutch position at which the friction clutch is in a mechanical maximum disengaged state when the vehicle is stopped and when the dog clutch gearbox is in a gear-in state and the engine is being driven, and performs a control to maintain a state in which the clutch position of the friction clutch is at a clutch position between the first clutch position and the second clutch position at the time of a shift change while the vehicle is running.

Further, according to a second preferred aspect, the control unit does not shift the clutch position of the friction clutch up to the second clutch position at the time of a shift change while the vehicle is running.

Further, according to a third preferred aspect, the control unit holds the clutch position of the friction clutch at a specific position between the first clutch position and the second clutch position for a prescribed period of time at the time of a shift change while the vehicle is running.

Further, according to a fourth preferred aspect, the control unit performs an operation to shift the clutch position of the friction clutch first to the engaged side and then to the disengaged side within a range between the first clutch position and the second clutch position at the time of a shift change while the vehicle is running.

Further, according to a fifth preferred aspect, the control unit changes a speed at which the friction clutch is engaged or disengaged at the time of a shift change while the vehicle is running.

Further, according to a sixth preferred aspect, the automatic shift control device further comprises a gear position sensor for detecting a gear position in the dog clutch gearbox, wherein the control unit detects an engaged state in which the engaging projections are engaged with the engaging recesses based on the gear position sensor and engages the friction clutch when dog abutment state transfers to the engaged state at the time of a shift change while the vehicle is running.

Further, according to a seventh preferred aspect, the control unit stores a preset specific period of time as a period of time for which the dog abutment transfers to the engaged state, and engages the friction clutch when the specific period of time elapses at the time of a shift change while the vehicle is running.

Further, according to an eighth preferred aspect, there is provided an automatic shift control device mounted on a vehicle provided with an engine, comprising: a friction clutch; a dog clutch gearbox which has a plurality of first gears each having engaging projections, and a plurality of second gears each having engaging recesses engageable with the engaging projections, and in which a gear change is made when the engaging projections of each first gear are engaged with any engaging recesses of each second gear; an automatic shift device with an electric actuator for engaging and disengaging the friction clutch and performing a gear change in the dog clutch gearbox; a control unit which, at the time of a shift change, controls the actuator to change the state of the friction clutch so that a clutch position of the friction clutch reaches a clutch position on the disengaged side from a first clutch position as a clutch position at which a half clutch state finishes, and engages the friction clutch after a gear change; and a gear position sensor for detecting a gear position in the dog clutch gearbox, wherein the control unit shifts the clutch position of the friction clutch to a second clutch position at which the friction clutch is in a mechanical maximum disengaged state when the vehicle is stopped and when the dog clutch gearbox is in a gear-in state and the engine is being driven, and detects an engaged state in which the engaging projections are engaged with the engaging recesses based on the gear position sensor, and engages the friction clutch before the clutch position of the friction clutch reaches the second clutch position when the engaged state is established while the clutch position of the friction clutch is on a disengaged side from the first clutch position at the time of a shift change while the vehicle is running.

Further, according to a ninth preferred aspect, there is provided a vehicle with an automatic shift control device according to one of the first to eighth aspects.

Further, according to a tenth preferred aspect, the vehicle being a saddle-type vehicle according to the ninth aspect.

Further, according to an eleventh preferred aspect, the automatic shift device has a hydraulic cylinder for generating hydraulic pressure, and wherein the friction clutch is engaged and disengaged by hydraulic pressure which the actuator generates by driving the hydraulic cylinder.

Further, according to a twelfth preferred aspect, the vehicle, comprises: a friction clutch; a dog clutch gearbox which has a plurality of first gears each having engaging projections, and a plurality of second gears each having engaging recesses engageable with the engaging projections, and in which a gear change is made when the engaging projections of each first gear are engaged with any engaging recesses of each second gear; an electric actuator; a shift shaft which is rotated by power of the actuator; a clutch transmitting mechanism for engaging and disengaging the friction clutch in synchronization with the rotation of the shift shaft; and a gearbox transmitting mechanism for performing a gear change in the dog clutch gearbox in synchronization with the rotation of the shift shaft, wherein, at the time of a shift change, the gearbox transmitting mechanism is driven to perform a gear change in the dog clutch gearbox after the actuator has been driven to rotate the shift shaft, and the clutch transmitting mechanism has been driven to shift the clutch position of the friction clutch to a clutch position on the disengaged side from a first clutch position as a clutch position at which a half clutch state finishes, and then the clutch transmitting mechanism is driven to engage the friction clutch, and wherein the clutch position of the friction clutch is maintained at a clutch position between the first clutch and a second clutch position at which the friction clutch is in a mechanical maximum disengaged state at the time of a shift change during running.

Further, according to a thirteenth preferred aspect, the clutch transmitting mechanism is a ball cam mechanism for converting the rotating movement of the shift shaft into reciprocating movement to engage and disengage the clutch, having: a first cam plate having a first cam groove and rotatable together with the shift shaft; a second cam plate having a second cam groove and arranged opposed to the first cam plate; and a ball interposed between the first and second cam grooves and held between the first and second cam plates, and wherein the clutch position of the friction clutch reaches a clutch position between the first clutch position and the second clutch position when the distance between the first cam plate and the second cam plate becomes maximum.

Further, according to a fourteenth preferred aspect, the vehicle being a saddle-type vehicle.

The description above discloses a two-wheeled motor vehicle provided with an automatic shift control device, in which specific gears are allowed to engage with each other properly whenever a shift change operation is conducted, and wherein in a clutch engaging and disengaging operation at the time of a shift change, a state in which the clutch position of the clutch is at a specific position between a first clutch position at which a half clutch state finishes and a second clutch position at which the clutch is in a mechanical maximum disengaged state is maintained until completion of a gear change is detected by a gear position sensor. Therefore, even if a dog abutment state occurs between first gears with engaging projections and second gears with engaging recesses, the dog abutment can be resolved properly.

## Claims

1. Vehicle (10) comprising an engine (28), a friction clutch (54), a dog clutch gearbox (80), an automatic shift device with an electric actuator (63) for engaging and disengaging the friction clutch (54) and performing a gear change in the dog clutch gearbox (80), and a control unit (100),
**characterized in that** at a time of the gear change the actuator (63) controls the actuator (63) to perform the following steps:
automatically engaging and disengaging a friction clutch of the shift device and performing a gear change in a dog-clutch gearbox of the shift device, wherein the friction clutch is maintained in a state in which the clutch position is between a first clutch position, at which a half-clutch state finishes, and a second clutch position, at which the clutch is in a mechanical maximum disengaged state, until the gear change is completed and engaging the friction clutch (54) after the gear change.

2. Vehicle according to claim 1, **characterized in that** the dog clutch gearbox (80) has a plurality of first gears (57a) each having engaging projections (57c), and a plurality of second gears (57b) each having engaging recesses (57e) engageable with the engaging projections (57c), wherein the gear change is made when the engaging projections (57c) of each first gear (57a) are engaged with any engaging recesses (57e) of each second gear (57b).

3. Vehicle according to claim 1 or 2, **characterized in that** the control unit (100) is configured to cause a shift of the clutch position of the friction clutch (54) to the second clutch position when the vehicle is stopped and when the dog clutch gearbox (80) is in a gear-in state and the engine (28) is being driven, and to cause the actuator (63) to keep the friction clutch (54) in the clutch position between the first clutch position and the second clutch position at the time of a shift change while the vehicle is running.

4. Vehicle according to one of the claims 1 to 3, **characterized in that** the control unit (100) is configured to cause a shift of the clutch position of the friction clutch (54) up to the second clutch position at the time of a shift change while the vehicle is running.

5. Vehicle according to one of the claims 1 to 3, **characterized in that** the control unit (100) is configured to cause a hold of the clutch position of the friction clutch (54) at a specific position between the first clutch position and the second clutch position for a prescribed period of time at the time of a shift change while the vehicle is running.

6. Vehicle according to one of the claims 1 to 3, **characterized in that** the control unit (100) is configured to cause a shift of the clutch position of the friction clutch (54) first to the engaged side and then to the disengaged side within a range between the first clutch position and the second clutch position at the time of a shift change while the vehicle is running.

7. Vehicle according to one of the claims 1 to 3, **characterized in that** the control unit (100) is configured to cause a change of a speed at which the friction clutch (54) is engaged or disengaged at the time of a shift change while the vehicle is running.

8. Vehicle according to one of the claims 2 to 7, **characterized by** a gear position sensor (70) for detecting a gear position in the dog clutch gearbox (80), wherein the control unit (100) is configured to detect an engaged state in which the engaging projections (57c) are engaged with the engaging recesses (57e) based on a signal of the gear position sensor (70), and to cause an engagement of the friction clutch (54) when dog abutment state transfers to the engaged state at the time of a shift change while the vehicle is running.

9. Vehicle according to one of the claims 1 to 8, **characterized in that** the control unit (100) is configured to store a preset specific period of time as a period of time for which the dog abutment transfers to the engaged state, and to cause an engagement of the friction clutch (54) when the specific period of time elapses at the time of a shift change while the vehicle is running.

10. Vehicle according to claim 2 or 3, **characterized by**
a gear position sensor (70) for detecting a gear position in the dog clutch gearbox (80), wherein the control unit (100) is configured to cause a shift of the clutch position of the friction clutch (54) to the second clutch position when the vehicle is stopped and when the dog clutch gearbox (80) is in a gear-in state and the engine (28) is being driven; to detect an engaged state in which the engaging projections (57c) are engaged with the engaging recesses (57e) based on a signal of the gear position sensor (70); and to cause an engagement of the friction clutch (54) before the clutch position of the friction clutch (54) reaches the second clutch position when the engaged state is established while the clutch position of the friction clutch (54) is on a disengaged side from the first clutch position at the time of a shift change while the vehicle is running.

11. Vehicle according to one of the claims 1 to 10, **characterized in that** the automatic shift device has a hydraulic cylinder (64a) for generating hydraulic pressure, and the friction clutch (54) is engaged and disengaged by hydraulic pressure which the actuator (63) generates by driving the hydraulic cylinder (64a).

12. Vehicle according to one of the claims 1 to 3, **characterized by**
a shift shaft which is rotated by power of the actuator;
a clutch transmitting mechanism for engaging and disengaging the friction clutch (54) in synchronization with the rotation of the shift shaft; and
a gearbox transmitting mechanism for performing a gear change in the dog clutch gearbox (80) in synchronization with the rotation of the shift shaft,
wherein, at the time of a shift change, the gearbox transmitting mechanism is driven to perform a gear change in the dog clutch gearbox (80) after the actuator (63) has been driven to rotate the shift shaft, and the clutch transmitting mechanism has been driven to shift the clutch position of the friction clutch (54) to a clutch position on the disengaged side from a first clutch position as a clutch position at which a half clutch state finishes, and then the clutch transmitting mechanism is driven to engage the friction clutch (54), and
wherein the clutch position of the friction clutch (54) is kept at a clutch position between the first clutch and a second clutch position at which the friction clutch is in a mechanical maximum disengaged state at the time of a shift change during running.

13. Vehicle according to claim 12, **characterized in that** the clutch transmitting mechanism is a ball cam mechanism for converting a rotating movement of the shift shaft into reciprocating movement to engage and disengage the clutch,
the clutch transmitting mechanism having a first cam plate having a first cam groove and rotatable together with the shift shaft; a second cam plate having a second cam groove and arranged opposed to the first cam plate; and a ball interposed between the first and second cam grooves and held between the first and second cam plates, wherein the clutch position of the friction clutch (54) reaches a clutch position between the first clutch position and the second clutch position when the distance between the first cam plate and the second cam plate becomes maximum.

14. Vehicle according to one of the claims 1 to 13, being a motorcycle.

15. Method to control an automatic shift device of a vehicle including automatically engaging and disengaging a friction clutch of the shift device and performing a gear change in a dog-clutch gearbox of the shift device, wherein the friction clutch is maintained in a state in which the clutch position is between a first clutch position, at which a half-clutch state finishes, and a second clutch position, at which the clutch is in a mechanical maximum disengaged state, until the gear change is completed, and engaging the friction clutch after the gear change.

## Patentansprüche

1. Fahrzeug (10), aufweisend einen Motor (28), eine Reibungskupplung (54), ein Klauenkupplungs- Wechselgetriebe (80), eine automatische Schaltvorrichtung mit einem elektrischen Betätiger (63) zum In- Eingriff- Bringen oder Außer- Eingriff-Bringen der Reibungskupplung (54) und Ausführen einer Gangänderung in dem Klauenkupplungs- Wechselgetriebe (80) und eine Steuereinheit (100),
**dadurch gekennzeichnet, dass** zu einem Zeitpunkt des Ändems des Ganges der Betätiger (63) den Betätiger (63) steuert, um die folgenden Schritte auszuführen:
automatisches In- Eingriff- Bringen oder Außer- Eingriff- Bringen einer Reibungskupplung der Schaltvorrichtung und Ausführen einer Änderung des Ganges in einem Klauenkupplungs- Wechselgetriebe der Schaltvorrichtung, wobei die Reibungskupplung in einem Zustand gehalten wird, in dem die Kupplungsposition zwischen einer ersten Kupplungsposition ist, in der ein Halb- Kupplungszustand endet, und einer zweiten Kupplungsposition, in dem die Kupplung in einem mechanisch maximalen Außer- Eingriffs- Zustand ist, bis die Änderung des Ganges abgeschlossen ist, und die Reibungskupplung (54) nach der Änderung des Ganges in Eingriff gebracht wird.

2. Fahrzeug nach Anspruch 1, **dadurch gekennzeichnet, dass** das Klauenkupplungs- Wechselgetriebe (80) eine Mehrzahl von ersten Zahnrädern (57a) hat, jedes mit Eingriffsvorsprüngen (57c), und eine Mehrzahl von zweiten Zahnrädern (57b), jedes mit Eingriffsaussparungen (57e), die mit den Eingriffsvorsprüngen (57c) in Eingriff bringbar sind, wobei die Änderung des Ganges vorgenommen wird, wenn die Eingriffsvorsprünge (57c) von jedem ersten Zahnrad (57a) mit beliebigen Eingriffsaussparungen (57e) jedes zweiten Zahnrades (57b) im Eingriff sind.

3. Fahrzeug nach Anspruch 1 oder 2, **dadurch gekennzeichnet, dass** die Steuereinheit (100) konfiguriert ist, ein Schalten der Kupplungsposition der Reibungskupplung (54) in die zweite Kupplungsposition zu veranlassen, wenn das Fahrzeug gestoppt wird und wenn das Klauenkupplungs- Wechselgetriebe (80) in einem Einrückzustand ist und der Motor (28) angetrieben wird, und um den Betätiger (63) zu veranlassen, die Reibungskupplung (54) in der Kupplungsposition zwischen der ersten Kupplungsposition und der zweiten Kupplungsposition zu der Zeit einer Änderung des Ganges zu halten, während das Fahrzeug fährt.

4. Fahrzeug nach einem der Ansprüche 1 bis 3, **dadurch gekennzeichnet, dass** die Steuereinheit (100) konfiguriert ist, ein Schalten der Kupplungsposition der Reibungskupplung (54) bis in die zweite Kupplungsposition zu der Zeit einer Änderung des Ganges zu veranlassen, während das Fahrzeug fährt.

5. Fahrzeug nach einem der Ansprüche 1 bis 3, **dadurch gekennzeichnet, dass** die Steuereinheit (100) konfiguriert ist, ein Halten der Kupplungsposition der Reibungskupplung (54) in einer spezifischen Position zwischen der ersten Kupplungsposition und einer zweiten Kupplungsposition für eine vorgeschriebene Zeitdauer zum der Zeitpunkt einer Änderung des Ganges zu veranlassen, während das Fahrzeug fährt.

6. Fahrzeug nach einem der Ansprüche 1 bis 3, **dadurch gekennzeichnet, dass** die Steuereinheit (100) konfiguriert ist, ein Verschieben der Kupplungsposition der Reibungskupplung (54) zuerst nach der Eingriffsseite und dann nach der Außer-Eingriffs- Seite innerhalb eines Bereiches zwischen der ersten Kupplungsposition und der zweiten Kupplungsposition zum der Zeitpunkt einer Änderung des Ganges zu veranlassen, während das Fahrzeug fährt.

7. Fahrzeug nach einem der Ansprüche 1 bis 3, **dadurch gekennzeichnet, dass** die Steuereinheit (100) konfiguriert ist, eine Veränderung einer Drehzahl, bei der die Reibungskupplung (54) im Eingriff oder außer Eingriff ist, zu der Zeit einer Gangänderung zu veranlassen, während das Fahrzeug fährt.

8. Fahrzeug nach einem der Ansprüche 2 bis 7, **gekennzeichnet durch** einen Gangpositionssensor (70) zum Erfassen einer Gangposition in dem Klauenkupplungs- Wechselgetriebe (80), wobei die Steuereinheit (100) konfiguriert ist, einen Eingriffszustand zu erfassen, in dem die Eingriffsvorsprünge (57c) mit den Eingriffsaussparungen (57e) im Eingriff sind auf der Grundlage eines Signales des Gangpositionssensors (70), und um einen Eingriff der Reibungskupplung (54) zu veranlassen, wenn der Klauenanlagezustand in den Eingriffszustand zu einem Zeitpunkt einer Änderung des Ganges übergeht, während das Fahrzeug fährt.

9. Fahrzeug nach einem der Ansprüche 1 bis 8, **dadurch gekennzeichnet, dass** die Steuereinheit (100) konfiguriert ist, eine vorbestimmte besondere Zeitdauer als eine Zeitdauer zu speichern, für die die Klauenanlage in den Eingriffszustand übergeht, und um einen Eingriff der Reibungskupplung (54) zu veranlassen, wenn die besondere Zeitdauer zu dem Zeitpunkt einer Änderung des Ganges abläuft, während das Fahrzeug fährt.

10. Fahrzeug nach Anspruch 2 oder 3, **gekennzeichnet durch**
einen Gangpositionssensor (70) zum Erfassen einer Gangposition in dem Klauenkupplungs- Wechselgetriebe (80), wobei die Steuereinheit (100) konfiguriert ist, ein Schalten der Kupplungsposition der Reibungskupplung (54) in die zweite Kupplungsposition zu veranlassen, wenn das Fahrzeug gestoppt wird und wenn das Klauenkupplungs- Wechselgetriebe (80) in einem Einrückzustand ist und der Motor (28) angetrieben wird; um einen Eingriffszustand zu erfassen, in dem die Eingriffsvorsprünge (57c) mit den Eingriffsaussparungen (57e) auf der Grundlage eines Signals des Gangpositionssensors (70) im Eingriff sind; und um einen Eingriff der Reibungskupplung (54) zu veranlassen, bevor die Kupplungsposition der Reibungskupplung (54) die zweite Kupplungsposition erreicht, wenn der Eingriffszustand hergestellt ist, während die Kupplungsposition der Reibungskupplung (54) auf einer Außer- Eingriffs- Seite aus der ersten Kupplungsposition zu dem Zeitpunkt einer Änderung des Ganges ist, während das Fahrzeug fährt.

11. Fahrzeug nach einem der Ansprüche 1 bis 10, **dadurch gekennzeichnet, dass** die automatische Schaltvorrichtung einen Hydraulikzylinder (64a) zum Erzeugen eines Hydraulikdruckes hat und die Reibungskupplung (54) durch den Hydraulikdruck, den der Betätiger (63) durch Antrieben des Hydraulikzylinders (64a) erzeugt, im Eingriff oder außer Eingriff ist.

12. Fahrzeug nach einem der Ansprüche 1 bis 3, **gekennzeichnet durch**
eine Schaltwelle, die **durch** die Kraft des Betätigers gedreht wird;
eine Kupplungsübertragungsvorrichtung zum In- Eingriff- Bringen oder Außer-Eingriff- Bringen der Reibungskupplung (54) synchron mit der Drehung der Schaltwelle; und
eine Getriebeübertragungsvorrichtung zum Ausführen einer Änderung des Ganges in dem Klauenkupplungs- Wechselgetriebe (80) synchron mit der Drehung der Schaltwelle,
wobei zu einem Zeitpunkt einer Änderung des Ganges die Getriebeübertragungsvorrichtung angetrieben wird, um eine Änderung des Ganges in dem Klauenkupplungs- Wechselgetriebe (80) auszuführen, nachdem der Betätiger (63) angetrieben worden ist, um die Schaltwelle zu drehen, und die Kupplungsübertragungsvorrichtung angetrieben worden ist, um die Kupplungsposition der Reibungskupplung (54) in eine Kupplungsposition auf der Außer- Eingriffs- Seite aus einer ersten Kupplungsposition als einer Kupplungsposition, zu verschieben, bei der ein Halb- Kupplungszustand endet und anschließend die Kupplungsübertragungsvorrichtung angetrieben wird, die Reibungskupplung (54) in Eingriff zu bringen, und
wobei die Kupplungsposition der Reibungskupplung (54) bei einer Kupplungsposition zwischen der ersten Kupplungs- und einer zweiten Kupplungsposition gehalten wird, bei der die Reibungskupplung (54) in einem mechanisch maximalen Außer- Eingriffs- Zustand zu dem Zeitpunkt einer Schaltänderung während des Fahrens ist.

13. Fahrzeug nach Anspruch 12, **dadurch gekennzeichnet, dass** die Kupplungsübertragungsvorrichtung eine Kugelnockenvorrichtung zum Umwandeln einer Drehbewegung der Schaltwelle in eine hin- und hergehende Bewegung ist, um die Kupplung in Eingriff oder außer Eingriff zu bringen, wobei die Kupplungsübertragungsvorrichtung eine erste Nockenplatte hat, die eine erste Nockennut hat und gemeinsam mit der Schaltwelle drehbar ist, eine zweite Nockenplatte, die eine zweite Nockennut hat und zu der ersten Nockenplatte gegenüberliegend angeordnet ist; und wobei eine Kugel zwischen der ersten und zweiten Nockennut eingesetzt ist und zwischen der ersten und zweiten Nockenplatte gehalten wird, wobei die Kupplungsposition der Reibungskupplung (54) eine Kupplungsposition zwischen der ersten Kupplungsposition und der zweiten Kupplungsposition erreicht, wenn der Abstand zwischen der ersten Nockenplatte und der zweiten Nockenplatte maximal wird.

14. Fahrzeug nach einem der Ansprüche 1 bis 13 als ein Motorrad.

15. Verfahren zur Steuerung einer automatischen Schaltvorrichtung eines Fahrzeuges, enthaltend ein automatisches In- Eingriff- Bringen oder Außer- Eingriff- Bringen einer Reibungskupplung der Schaltvorrichtung und Ausführen einer Änderung des Ganges in einem Klauenkupplungs- Wechselgetriebe der Schaltvorrichtung, wobei die Reibungskupplung in einem Zustand gehalten wird, in dem die Kupplungsposition zwischen einer ersten Kupplungsposition ist, in dem ein Halb-Kupplungszustand endet, und einer zweiten Kupplungsposition, in der die Kupplung in einem mechanisch maximal Außer- Eingriffs- Zustand ist, bis die Änderung des Ganges abgeschlossen ist, und In- Eingriff- Bringen der Reibungskupplung nach der Änderung des Ganges.

## Revendications

1. Véhicule (10) comprenant un moteur (28), un embrayage à friction (54), une boîte à engrenages à embrayage à griffe (80), un dispositif de changement de vitesses automatique avec un actionneur électrique (63) destiné à engager et désengager l'embrayage à friction (54) et réaliser un changement d'engrenages dans la boîte à engrenages à embrayage à griffe (80), et une unité de commande (100),
**caractérisé en ce que**, à l'instant du changement d'engrenages, l'actionneur (63) commande l'actionneur (63) pour réaliser les étapes suivantes :
automatiquement engager et désengager un embrayage à friction du dispositif de changement de vitesses et réaliser un changement d'engrenages dans une boîte à engrenages à embrayage à griffe du dispositif de changement de vitesses, dans lequel l'embrayage à friction est maintenu dans un état dans lequel la position d'embrayage est entre une première position d'embrayage, dans laquelle un état de demi-embrayage se termine, et une seconde position d'embrayage, dans laquelle l'embrayage est dans un état désengagé mécanique maximum, jusqu'à ce que le changement d'engrenages soit achevé et engager l'embrayage à friction (54) après le changement d'engrenages.

2. Véhicule selon la revendication 1, **caractérisé en ce que** la boîte à engrenages à embrayage à griffe (80) possède une pluralité de premiers pignons (57a) possédant chacun des saillies d'engagement (57c), et une pluralité de seconds pignons (57b) possédant chacun des évidements d'engagement (57e) engageables avec les saillies d'engagement (57c), dans lequel le changement d'engrenages est réalisé lorsque les saillies d'engagement (57c) de chaque premier pignon (57a) sont engagées avec de quelconques évidements d'engagement (57e) de chaque second pignon (57b).

3. Véhicule selon la revendication 1 ou 2, **caractérisé en ce que** l'unité de commande (100) est configurée pour entraîner un changement de la position d'embrayage de l'embrayage à friction (54) jusqu'à la seconde position d'embrayage lorsque le véhicule est arrêté et lorsque la boîte à engrenages à embrayage à griffe (80) est dans un état en prise et le moteur (28) est entraîné, et pour entraîner l'actionneur (63) pour maintenir l'embrayage à friction (54) dans la position d'embrayage entre la première position d'embrayage et la seconde position d'embrayage à l'instant d'un changement de vitesses alors que le véhicule est en fonctionnement.

4. Véhicule selon une des revendications 1 à 3, **caractérisé en ce que** l'unité de commande (100) est configurée pour entraîner un changement de la position d'embrayage de l'embrayage à friction (54) jusqu'à la seconde position d'embrayage à l'instant d'un changement de vitesses alors que le véhicule est en fonctionnement.

5. Véhicule selon une des revendications 1 à 3, **caractérisé en ce que** l'unité de commande (100) est configurée pour entraîner un maintien de la position d'embrayage de l'embrayage à friction (54) dans une position spécifique entre la première position d'embrayage et la seconde position d'embrayage pendant une période prescrite à l'instant d'un changement de vitesses alors que le véhicule est en fonctionnement.

6. Véhicule selon une des revendications 1 à 3, **caractérisé en ce que** l'unité de commande (100) est configurée pour entraîner un changement de la position d'embrayage de l'embrayage à friction (54) d'abord jusqu'au côté engagé et puis jusqu'au côté désengagé au sein d'une plage entre la première position d'embrayage et la seconde position d'embrayage à l'instant d'un changement de vitesses alors que le véhicule est en fonctionnement.

7. Véhicule selon une des revendications 1 à 3, **caractérisé en ce que** l'unité de commande (100) est configurée pour entraîner un changement d'une vitesse dans laquelle l'embrayage à friction (54) est engagé ou désengagé à l'instant d'un changement de vitesses alors que le véhicule est en fonctionnement.

8. Véhicule selon une des revendications 2 à 7, **caractérisé par** un capteur de position de pignon (70) destiné à détecter une position de pignon dans la boîte à engrenages à embrayage à griffe (80), dans lequel l'unité de commande (100) est configurée pour détecter un état engagé dans lequel les saillies d'engagement (57c) sont engagées avec les évidements d'engagement (57e) sur la base du capteur de position de pignon (70), et pour entraîner un engagement de l'embrayage à friction (54) lorsque l'état de butée de griffe passe à l'état engagé à l'instant d'un changement de vitesses alors que le véhicule est en fonctionnement.

9. Véhicule selon une des revendications 1 à 8, **caractérisé en ce que** l'unité de commande (100) est configurée pour stocker une période spécifique prédéterminée en tant que période pendant laquelle la butée de griffe passe à l'état engagé, et pour entraîner un engagement de l'embrayage à friction (54) lorsque la période spécifique s'est écoulée à l'instant d'un changement de vitesses alors que le véhicule est en fonctionnement.

10. Véhicule selon la revendication 2 ou 3, **caractérisé par** :
un capteur de position de pignon (70) destiné à détecter une position de pignon dans la boîte à engrenages à embrayage à griffe (80), dans lequel l'unité de commande (100) est configurée pour entraîner un changement de la position d'embrayage de l'embrayage à friction (54) jusqu'à la seconde position d'embrayage lorsque le véhicule est arrêté et lorsque la boîte à engrenages à embrayage à griffe (80) est dans un état en prise et le moteur (28) est entraîné ; pour détecter un état engagé dans lequel les saillies d'engagement (57c) sont engagées avec les évidements d'engagement (57e) sur la base d'un signal du capteur de position de pignon (70) ; et pour entraîner an engagement de l'embrayage à friction (54) avant que la position d'embrayage de l'embrayage à friction (54) n'atteigne la seconde position d'embrayage lorsque l'état engagé est établi alors que la position d'embrayage de l'embrayage à friction (54) est sur un côté désengagé à partir de la première position d'embrayage à l'instant d'un changement de vitesses alors que le véhicule est en fonctionnement.

11. Véhicule selon une des revendications 1 à 10, **caractérisé en ce que** le dispositif de changement de vitesses automatique possède un vérin hydraulique (64a) destiné à générer une pression hydraulique, et l'embrayage à friction (54) est engagé et désengagé par la pression hydraulique que l'actionneur (63) génère en entraînant le vérin hydraulique (64a).

12. Véhicule selon une des revendications 1 à 3, **caractérisé par** :
un arbre de changement de vitesses qui est tourné par une puissance de l'actionneur ;
un mécanisme de transmission d'embrayage destiné à engager et désengager l'embrayage à friction (54) en synchronisation avec la rotation de l'arbre de changement de vitesses ; et
un mécanisme de transmission de boîte à engrenages destiné à réaliser un changement d'engrenages dans la boîte à engrenages à embrayage à griffe (80) en synchronisation avec la rotation de l'arbre de changement de vitesses,
dans lequel, à l'instant d'un changement de vitesses, le mécanisme de transmission de boîte à engrenages est entraîné pour réaliser un changement d'engrenages dans la boîte à engrenages à embrayage à griffe (80) après que l'actionneur (63) a été entraîné pour faire tourner l'arbre de changement de vitesses, et le mécanisme de transmission d'embrayage a été entraîné pour changer la position d'embrayage de l'embrayage à friction (54) jusqu'à une position d'embrayage sur le côté désengagé à partir d'une première position d'embrayage en tant que position d'embrayage dans laquelle un état de demi-embrayage se termine, et puis le mécanisme de transmission d'embrayage est entraîné pour engager l'embrayage à friction (54), et
dans lequel la position d'embrayage de l'embrayage à friction (54) est maintenue dans une position d'embrayage entre le premier embrayage et une seconde position d'embrayage dans laquelle l'embrayage à friction est dans un état désengagé mécanique maximum à l'instant d'un changement de vitesses au cours du fonctionnement.

13. Véhicule selon la revendication 12, **caractérisé en ce que** le mécanisme de transmission d'embrayage est un mécanisme de came à bille destiné à convertir le mouvement rotatif de l'arbre de changement de vitesses en mouvement alternatif pour engager et désengager l'embrayage, le mécanisme de transmission d'embrayage possédant : un premier disque à came possédant une première rainure de came et rotatif conjointement à l'arbre de changement de vitesses ; un second disque à came possédant une seconde rainure de came et agencé de façon opposée au premier disque à came ; et une bille interposée entre les première et seconde rainures de came et maintenue entre les premier et second disques à came, dans lequel la position d'embrayage de l'embrayage à friction (54) atteint une position d'embrayage entre la première position d'embrayage et la seconde position d'embrayage lorsque la distance entre le premier disque à came et le second disque à came devient maximum.

14. Véhicule selon une des revendications 1 à 13, le véhicule étant un motocycle.

15. Procédé de commande d'un dispositif de changement de vitesses automatique d'un véhicule comprenant les étapes consistant à engager et désengager automatiquement un embrayage à friction du dispositif de changement de vitesses et réaliser un changement d'engrenages dans une boîte à engrenages à embrayage à griffe du dispositif de changement de vitesses, dans lequel l'embrayage à friction est maintenu dans un état dans lequel la position d'embrayage est entre une première position d'embrayage, dans laquelle un état de demi-embrayage se termine, et une seconde position d'embrayage, dans laquelle l'embrayage est dans un état désengagé mécanique maximum, jusqu'à ce que le changement d'engrenages soit achevé, et engager l'embrayage à friction après le changement d'engrenages.
